# EUROPÄISCHE PATENTSCHRIFT

(11) **EP 0 541 606 B1**
(45) Veröffentlichungstag und Bekanntmachung des Hinweises auf die Patenterteilung: **28.12.1994**
(21) Anmeldenummer: 91913346.2
(22) Anmeldetag: 25.07.1991
(51) Int. Cl.: C09K 7/06, C09K 7/02, B01F 17/56

(54) **Verwendung oberflächenaktiver Alkylglycosidverbindungen in Öl-basierten Bohrspülungen und anderen Bohrlochbehandlungs- mitteln**
Use of Surface-Active Alkyglycoside Compounds in Oil-Based Bore-Flushing Agents and other Borehole-Treatment Fluids
Utilisation de composes d'alkylglucoside tensio-actifs dans des solutions de curage et dans d'autres agents de traitements de puits de forage a base d'huile

(30) Priorität: 03.08.1990 DE 4024658
(43) Veröffentlichungstag der Anmeldung: 19.05.1993
(73) Patentinhaber: Henkel Kommanditgesellschaft auf Aktien, 40191 Düsseldorf (DE)
(72) Erfinder: MÜLLER, Heinz, D-4019 Monheim (DE); HEROLD, Claus-Peter, D-4020 Mettmann (DE); WEUTHEN, Manfred, D-5650 Solingen 11 (DE)
(86) Internationale Anmeldenummer: EP9101396
(87) Internationale Veröffentlichungsnummer: WO9202594

(56) Entgegenhaltungen:
- EP-A- 0 070 074
- EP-A- 0 374 671
- EP-A- 0 386 638
- GB-A- 2 206 145
- US-A- 4 528 106

## Beschreibung

Die Erfindung betrifft die Verwendung ausgewählter Emulgatoren mit erhöhter ökologischer Verträglichkeit für die Herstellung von fließfähigen dispersen Systemen, die als W/O-Invert-Emulsionen mit geschlossener Ölphase vorliegen und für den technischen Einsatz im Rahmen von fließfähigen Bohrlochbehandlungsmitteln geeignet sind. Als charakteristisches Beispiel für Mittel dieser Art wird im nachfolgenden die Erfindung anhand von Öl-basierten Bohrspülflüssigkeiten und darauf aufgebauten Bohrspülschlämmen beschrieben. Das Anwendungsgebiet der erfindungsgemäßen Abwandlung von Hilfsflüssigkeiten der hier betroffenen Art ist jedoch nicht darauf beschränkt. In Betracht kommen insbesondere auch die Gebiete der Spotting Fluids, Spacer, Hilfsflüssigkeiten für Workover und Stimulierung und für das Fracturing.

Die Erfindung geht dabei insbesondere von der Aufgabe aus, die ökologische Verträglichkeit dieser heute weltweit in großtechnischem Einsatz befindlichen Hilfsmittel dadurch substantiell zu beeinflussen, daß ausgewählte und insbesondere ökologisch unbedenkliche Emulgatortypen zum Einsatz kommen. Die Erfindung will in ihrer bevorzugten Ausführungsform diese biologisch unbedenklichen Emulgatoren gleichzeitig mit Ölphasen erhöhter Umweltverträglichkeit und insbesondere biologischer Abbaubarkeit verwenden.

### Zum Stand der Technik

Auf dem Gebiet flüssiger Spülsysteme zur Niederbringung von Gesteinsbohrungen unter Aufbringen des abgelösten Bohrkleins haben heute die sogenannten Invert-Bohrspülschlämme hervorragende Bedeutung, die auf der Basis von W/O-Emulsionen eine disperse wäßrige Phase in der geschlossenen Ölphase enthalten. Der Gehalt an disperser wäßriger Phase liegt üblicherweise im Bereich von etwa 5 bis 50 Gew.-%.

Bekannt sind aber auch Wasser-basierte Bohrspülungen mit einer emulgierten dispersen Ölphase (O/W-Typ), deren Ölgehalt von einigen Prozent bis etwa 50 Gew.-% reichen kann. O/W-Emulsionsspülungen dieser Art zeigen eine Reihe beträchtlicher Vorteile gegenüber rein Wasserbasierten Spülungstypen.

Zur Stabilisierung der jeweils gewählten Dispersionsform bedarf es des Einsatzes entsprechender Emulgatoren entweder vom W/O-Typ (Invert-Spülungen) bzw. vom O/W-Typ (Emulsionsspülungen). Zur einschlägigen Fachliteratur wird beispielsweise verwiesen auf G. R. Gray, H.C.H. Darley "Composition in Properties of Oil Well Drilling Fluids" 4. Auflage, Gulf Publishing Co., Houston London, 1981 insbesondere Seiten 51, 64 und 320 ff.

Die Ölphasen von Bohrspülungen der hier geschilderten Art und vergleichsweise aufgebauten anderen Bohrlochbehandlungsmitteln werden in der Praxis heute nahezu ausschließlich durch Mineralölfraktionen gebildet. Damit ist eine nicht unbeträchtliche Belastung der Umwelt verbunden, wenn beispielsweise die Bohrschlämme unmittelbar oder über das erbohrte Gestein in die Umwelt gelangen. Mineralöle sind nur schwer und anaerob praktisch nicht abbaubar und damit als langfristige Verschmutzung anzusehen. Wenn diese Ölphasen auch als der Hauptbestandteil oder wenigstens substantieller Anteil der Bohrspülung für ökologische Überlegungen ein wichtiger Ansatzpunkt sind, so muß doch auch den anderen Komponenten solcher Mehrstoffgemische entsprechende Aufmerksamkeit gewidmet werden. Besondere Bedeutung kommt hier den Emulgatoren zu. Bestimmungsgemäß sind Verbindungen dieser Art schon in geringer Konzentration hochaktive Wirkstoffe, die bekanntlich zur intensiven Interaktion mit dem pflanzlichen oder tierischen Organismus befähigt sind.

In der US-A-4 528 106 wird die Herstellung spezieller polyalkoxylierter Alkylglycosidverbindungen und deren Verwendung bei der Öl-Gewinnung beschrieben. Die genannten Verbindungen dienen hierbei zur Emulgierung des Rohöls in der wäßrigen Borhspülflüssigkeit.

Die EP-A-0 070 074 betrifft wäßrige Formulierungen auf Basis eines Gemisches von Alkylpolysaccharidverbindungen und anionischen Tensiden, die sich durch ein starkes Schaumbildungsvermögen auszeichnen. Diese Formulierungen können unter anderem beim Ölbohren Verwendung finden, um zusammen mit dem gebildeten Schaum Wasser und Bohrklein aus dem Bohrloch auszutragen.

### Die Aufgabe der Erfindung

Die vorliegende Erfindung geht von der Aufgabe aus, Arbeitsmittel der beschriebenen Art auf Basis von geschlossenen Ölphasen in Abmischung mit wäßrigen Phasen unter Berücksichtigung ihrer ökologischen Verträglichkeit substantiell gegenüber heute üblichen Arbeitsmitteln dieser Art zu verbessern. Die Erfindung will dabei insbesondere für das hier betroffene Einsatzgebiet Emulgatoren bzw. Emulgatorkomponenten vorschlagen, die an sich bekannt und dabei als in hohem Maße umweltverträglich beschrieben sind, für das hier betroffene Arbeitsgebiet aber noch keine Verwendung gefunden haben. In der bevorzugten Ausgestaltung der Erfindung sollen diese umweltverträglichen Emulgatoren vom W/O-Typ zusammen mit Öl/Wasser-Phasen zum Einsatz kommen, in denen die Ölphasen ihrerseits erhöhte ökologische Verträglichkeit besitzen und insbesondere durch natürliche Abbaumechanismen umweltschonend abgebaut werden können.

### Zur Lösung der erfindungsgemäßen Aufgabe

Zur Lösung der ersten Teilaufgabe schlägt die Erfindung vor, als ökologisch verträgliche bzw. unbedenkliche Verbindungen mit Emulgatorwirkung an sich bekannte oberflächenaktive Alkylglycosidverbindungen einzusetzen, die bekanntlich je nach ihrer Konstitution und der Interaktion mit dem umgebenden System als W/O-Emulgatoren einzustufen sind.

Gegenstand der Erfindung ist dementsprechend in einer ersten Ausführungsform die Verwendung oberflächenaktiver Alkylglycosidverbindungen vom W/O-Typ als ökologisch verträgliche Emulgatoren in fließ- und pumpfähigen Bohrspülungen oder anderen fließfähigen Bohrlochbehandlungsmitteln, die zusammen mit einer dispersen wäßrigen Phase eine geschlossene und dabei ökologisch verträgliche Ölphase aufweisen und für die umweltschonende Erschließung biologischer Lagerstätten, beispielsweise von Erdöl- bzw. Erdgasvorkommen, geeignet sind, wobei im Fall des Einsatzes hydrolysegefährdeter Ölphasen entsprechende Öle gewählt werden, die auch bei einer partiellen Verseifung im praktischen Einsatz zu keinen toxikologischen, insbesondere keinen inhalations-toxikologischen Gefährdungen führen.

Die Erfindung betrifft ferner in einer weiteren Ausführungsform entsprechende Invert-Bohrspülungen, die für eine umweltfreundliche Erschließung von geologischen Vorkommen geeignet sind und in einer geschlossenen Ölphase eine disperse wäßrige Phase zusammen mit Emulgatoren und üblichen weiteren Hilfsstoffen, beispielsweise Verdickungsmitteln, fluid-loss-Additiven, Beschwerungsmitteln, wasserlöslichen Salzen und Alkalireserven enthalten, welche dadurch gekennzeichnet sind, daß sie zusammen mit einer ökologisch verträglichen geschlossenen Ölphase oberflächenaktive Alkylglycosidverbindungen der nachstehenden allgemeinen Formel (I) als Emulgator beziehungsweise Emulgatorbestandteil enthalten.

Bevorzugt werden dabei diese Emulgatoren auf Basis oberflächenaktiver Alkylglycosidverbindungen zusammen mit umweltverträglichen Esterölen, oleophilen Alkoholen und/oder entsprechenden Ethern als geschlossene bzw. disperse Ölphase eingesetzt. Zu verweisen ist hier insbesondere auf einschlägige Entwicklungen der Anmelderin, die in einer größeren Zahl älterer Patentanmeldungen Vorschläge zum Austausch der bisher üblichen Mineralölfraktionen gegen ökologisch verträgliche leicht abbaubare Ölphasen beschreibt. Dabei werden unterschiedliche Typen von Austauschölen dargestellt, die auch in Mischung miteinander eingesetzt werden können. Es handelt sich hierbei um ausgewählte oleophile Monocarbonsäureester, ausgewählte Polycarbonsäureester, um wenigstens weitgehend wasserunlösliche und unter Arbeitsbedingungen fließfähige Alkohole, um entsprechende Ether sowie um ausgewählte Kohlensäureester. Summarisch wird hier verwiesen auf die älteren Anmeldungen DE-A-38 42 659, DE-A-38 42 703, DE-A-39 07 391, DE-A-39 07 392, DE-A-39 03 785, DE-A-39 03 784, DE-A-39 11 238, DE-A-39 11 299, DE-A-40 18 228, und DE-A-40 19 266. Alle hier genannten älteren Anmeldungen betreffen das Gebiet Öl-basierter Bohrspülsysteme, insbesondere vom W/O-Inverttyp.

In ihrer wichtigstens Ausführungsform erfaßt die Erfindung die gemeinsame Verwendung der zuvor geschilderten Emulgatoren aus der Klasse der oberflächenaktiven Alkylglycosidverbindungen zusammen mit geschlossenen Ölphasen der zuletzt geschildert Art. Die Offenbarung der genannten älteren Anmeldungen wird hiermit ausdrücklich zum Gegenstand der Erfindungsoffenbarung gemacht.

### Einzelheiten zur erfindungsgemäßen Lehre

Oberflächenaktive Alkylglycosidverbindungen und ihre Herstellung sind im Stand der Technik ausführlich beschrieben, wobei allerdings bisher das Schwergewicht für ihren Einsatz als O/W-Emulgatoren - beispielsweise im Zusammenhang mit Wasch- und Reinigungsmitteln - gelegt wird. Verwiesen wird in diesem Zusammenhang auf die DE-A-38 33 780 und die darin zitierte Primärliteratur. Ein jüngerer Vorschlag - siehe hierzu DE-A-37 20 330 - sieht die Mitverwendung von Alkylglycosiden im Rahmen der sogenannten Tertiär-Gewinnung von Erdöl aus entsprechenden Lagerstätten vor.

Wie dort können auch die jetzt für den erfindungsgemäßen Einsatzzweck zu verwendenden Alkylglycosidverbindungen durch die nachfolgende allgemeine Formel (I) charakterisiert werden

R-O-Zₙ (I)

wobei in dieser Formel R die nachfolgende Bedeutung hat:
Lineares und/oder verzweigtes Alkyl, das gesättigt und/oder olefinisch ungesättigt sein kann und wenigstens 8 C-Atome im Rest R aufweist. Bevorzugt sind entsprechende Reste R mit 10 bis 22 C-Atomen.

Z steht für einen oder mehrere Reste von Aldosen und/oder Ketosen, wobei hier insbesondere entsprechende Hexose- und/oder Pentose-Einheiten in Betracht kommen.

n charakterisiert die bei der Herstellung in bekannter Weise anfallende statistische Oligomerenverteilung der Reste Z. Zahlenmäßig bedeutet n im Mittel eine Zahl von 1 bis 5.

Besondere Bedeutung haben Alkylglycosidverbindungen der allgemeinen Formel (I), in denen n einen Zahlenwert im Bereich von etwa 1,2 bis 2,5 bedeutet.

Der Begriff der oberflächenaktiven Alkylglycosidverbindungen wird dabei auch erfindungsgemäß für die entsprechenden Reaktionsprodukte aus Zuckern und monofunktionellen Alkoholen eingesetzt. Als Zuckerkomponenten kommen die als Glykosen bezeichneten Aldosen bzw. Ketosen im weitesten Sinne in Betracht. Genannt seien Glucose, Fructose, Mannose, Galactose, Talose, Gulose, Allose, Altrose, Idose, Arabinose, Xylose, Lyxose und Ribose. Zur Herstellung der Alkylglycosidverbindungen werden wegen ihrer besseren Reaktionsfähigkeit bevorzugt Aldosen verwendet. Unter den Aldosen kommt wegen ihrer leichten Zugänglichkeit und Verfügbarkeit in technischen Mengen der Glucose besondere Bedeutung zu.

Die zur Acetalisierung eingesetzten monofunktionellen Alkohole sind insbesondere die großtechnisch zugänglichen Tensidalkohole mit 8 bis 22 C-Atomen, wobei native und/oder synthetische Alkohole in Betracht kommen. Native Alkohole werden bekanntlich aus der Hydrierung von Fettsäuren und Fettsäurederivaten erhalten. Charakteristische synthetische Komponenten sind die bekannten Oxoalkohole und/oder Ziegleralkohole. Die Alkohole selbst können gesättigt aber auch insbesondere olefinisch ungesättigt sein. Geradkettigen Alkoholen kommt wegen ihrer besonders raschen und problemlosen Abbaubarkeit wichtige Bedeutung zu. Aber auch verzweigte Alkohole beispielsweise solche von der Art der Oxoalkohole sind als ökologisch verträgliche Komponenten anzusehen und für die Acetalisierung zu Alkylglycosidverbindungen der erfindungsgemäß eingesetzten Art geeignet.

Alkylglycoside sind nicht nur wegen ihrer biologischen Unbedenklichkeit hervorragende Emulgatorkomponenten im Sinne des erfindungsgemäßen Handelns, als Acetale besitzen sie bekanntlich beträchtliche Alkalistabilität. Bohrlochbehandlungsmittel der hier betroffenen Art, insbesondere Bohrspülungen, sind in der Regel unter Mitverwendung von Alkalireserven aufgebaut, beispielsweise um dem Einbruch acider Reaktanten aus dem erbohrten Gestein entgegenwirken zu können. Diese Alkalistabilität der Alkylglycosidverbindungen ist ein wesentliches Element für ihre Brauchbarkeit im praktischen Einsatz. Gleichzeitig liefern sie - in Abhängigkeit von ihrer speziellen Struktur - hochstabile W/O-Emulsionen.

Die Einordnung von Emulgatoren in die jeweilige der zuvor genannten Klassen ist in an sich bekannter Weise bedingt durch das Verhältnis der oleophilen Anteile im jeweiligen Molekül zum hydrophilen Molekülanteil. Die Zuordnung kann dabei über den sogenannten HLB-Wert erfolgen, wobei bekanntlich die typischen W/O-Emulgatoren durch vergleichsweise niedrige HLB-Werte - etwa solche im Bereich von 3 bis 11 oder 12 - gekennzeichnet sind, während die klassischen O/W-Emulgatoren den höheren Bereich der HLB-Zahlenwerte besetzen. Auch im hier betroffenen Gebiet der Bohrlochbehandlungsmittel wird von dieser Klassifizierung Gebrauch gemacht, siehe hierzu beispielsweise die eingangs zitierte Literaturstelle Gray, Darley a.a.O. Seite 321.

Die erfindungsgemäß bevorzugte Funktionsfähigkeit ausgewählter Alkylglycosidverbindungen der allgemeinen Formel (I) leitet sich aus ihren Strukturelementen ab. Der oleophile Molekülanteil wird durch den Rest R dieses Formelbildes geprägt. Der Zuckerrest Z und hier insbesondere seine Oligomerverteilung - dargestellt durch den statistischen Zahlenwert für n - bilden den hydrophilen Molekülanteil. W/O-Emulgatoren dieser Art sind dementsprechend mit ausgeprägt oleophilen Molekülanteilen bei Einschränkung des hydrophilen Molekülanteils gekennzeichnet, umgekehrte Verhältnisse liegen im Fall der typischen O/W-Emulgatoren vor.

Dementsprechend sind für die Stabilisierung von W/O-Emulsionen insbesondere solche Verbindungen der allgemeinen Formel (I) geeignet, die wenigstens anteilsweise und vorzugsweise überwiegend Reste R mit 10 und mehr C-Atomen, vorzugsweise mit wenigstens etwa 12 C-Atomen aufweisen. Alkoholreste dieser Art mit 16 bis 18 C-Atomen können sowohl aus technischen wie aus ökonomischen Gründen besondere Bedeutung haben. Gleichzeitig schränkt sich hier der statistische Mittelwert n für den üblicherweise vorliegenden Glucoserest auf Werte unterhalb etwa 2,5 und vorzugsweise auf Maximalwerte von etwa 2 ein. n kann in bevorzugten Ausführungsformen im Bereich von etwa 1,2 bis 1,8 liegen.

Es ist ein Charakteristikum für die Verwendung der Alkylglycosidverbindungen im erfindungsgemäßen Sinne, daß verhältnismäßig leichte Verschiebungen in der Molekülstruktur die Eignung der jeweils betroffenen Komponente(n) beeinflussen können, wobei aber weiterhin charakteristisch ist, daß es gerade im Rahmen der aus herstellungstechnisch interessanten Verbindungen einen relativ breiten Bereich von Verbindungen gibt, die sich als stabilisierende Emulgatoren in dem Sinne der W/O-Typen eignen. Hier wird der entstehende Emulsionstyp stark mitbestimmt durch die gesamte Zusammensetzung beispielsweise der betroffenen Bohrspülung bzw. des entsprechenden Bohrschlammes.

Die Emulgatoren auf Alkylglycosidbasis werden in einer bevorzugten Ausführungsform als die wesentlichen Emulsionstyp-bildenden und Emulsionsstabilisierenden Komponenten eingesetzt. Die erfindungsgemäße Lehre erfaßt allerdings auch Mischsysteme, in denen Alkylglycoside mit anderen Emulgatorkomponenten zum Einsatz kommen. Bevorzugt sind diese andere Emulgatorkomponenten ihrerseits ökologisch verträglich, verwiesen sei in diesem Zusammenhang beispielsweise auf die ältere Anmeldung DE-A-40 03 028 und die parallele Patentanmeldung DE-A-40 24 659 der Anmelderin, in der ausgewählte Emulgatoren auf Etherbasis bzw. auf Di-Salz-Basis, insbesondere für Öl-basierte Invert-Emulsionen beschrieben sind.

Werden solche Emulgatorengemische eingesetzt, dann bilden in bevorzugten Ausführungsformen der Erfindung die Alkylglycosidverbindungen wenigstens etwa 10 Gew.-%, vorzugsweise wenigstens etwa 50 Gew.-%, des jeweiligen Emulgatorsystems.

Die Alkylglycosidverbindungen können in Mengen von etwa 0,1 bis 10 Gew.-%, bezogen auf die Summe der Flüssigphasen Wasser und Öl, Verwendung finden. Bevorzugte Mengen liegen im Bereich von etwa 0,5 bis 5 Gew.-% der Emulgatorkomponente, wobei dem Bereich von etwa 1 bis 3 Gew.-% des Emulgators - wiederum bezogen auf die Summe von Wasser + Öl - besondere Bedeutung zukommt.

Im Rahmen der bisher bekannten Herstellung von oberflächenaktiven Alkylglycosidverbindungen wird angestrebt, den bei der Acetalisierungsreaktion im Überschuß eingesetzten Alkohol nach Reaktionsende soweit vom Acetalisierungsprodukt abzutrennen, daß bestenfalls wenige Prozent freier Alkohol im Reaktionsgemisch verbleiben. Verwiesen wird auf die entsprechenden Angaben der DE-A-38 33 780 und die dort dafür beschriebene Methode der Dünnschichtverdampfung zur Alkoholrückgewinnung. Das Arbeiten nach der Erfindung kann auf diese vergleichsweise kostspielige Verfahrensstufe verzichten. Die zur Acetalisierung eingesetzten Alkohole R-OH sind durchweg oleophile Alkoholkomponenten, die im Überschuß und in Abmischung mit dem gebildeten Alkylglycosid vorliegen bzw. dem beabsichtigten Anwendungszweck zugeführt werden können. Gewünschtenfalls kann der überschüssige Alkohol anteilsweise abgetrennt werden, wobei es in einer bevorzugten Ausführungsform der Erfindung jedoch vorgesehen ist, die Alkylglycoside zusammen mit wenigstens etwa 50 Mol-% und vorzugsweise zusammen mit wenigstens etwa 100 Mol-% an freiem Alkohol - Mol-% jeweils bezogen auf Alkylglycosidverbindung - zu verwenden. Eine weitere Erleichterung für die wirtschaftliche Herstellung der erfindungsgemäßen Emulgatoren liegt im Verzicht auf die Bleiche der primär anfallenden Reaktionsprodukte, die nach dem druckschriftlichen Stand der Technik zur Herstellung dieser Emulgatorklasse als wesentlicher Verfahrensschritt angesehen wird. Das Herstellungsverfahren für Alkylglycosid enthaltende Wirkstoffgemische im erfindungsgemäßen Sinne kann sich dementsprechend auf die Verfahrensstufe der Acetalisierung - zweckmäßigerweise in Gegenwart von sauren Katalysatoren - einschränken. Anschließend wird lediglich der saure Katalysator neutralisiert. Das derart angefallene Reaktionsprodukt kann unmittelbar der technischen Verwertung zugeführt werden.

Als Anbietungsform der Alkylglycoside haben sich insbesondere zwei im wesentlichen wasserfreie Zubereitungsformen bewährt: Einerseits können die Alkylglycoside als Lösungskonzentrate in bevorzugt ökologisch unbedenklichen Ölphasen gelagert und gehandhabt werden. Zum anderen ist es möglich, die Alkylglycoside als Feststoffe - hier insbesondere in Granulatform - einzusetzen. Da die Emulgatorverbindungen als solche bei Normaltemperatur üblicherweise zwar Feststoffe darstellen, gleichwohl aber leicht zu Verklebungen und/oder Verschmierungen neigen, kann es zweckmäßig sein, zur entsprechenden Granulatbildung partikuläre Feststoffe mitzuverwenden. Geeignet sind hier typische Hilfsstoffe der Erdöltechnologie mit partikulärem Feststoffcharakter, beispielsweise Beschwerungsmittel, Salze, Viskositätsbildner und dergleichen oder es können auch inerte Hilfsstoffe mitverwendet werden.

In der eingangs besonders herausgestellten bevorzugten Ausführungsform werden die jeweiligen Ölphasen durch die in den zitierten älteren Anmeldungen der Anmelderin beschriebenen ökologisch verträglichen Esteröle, oleophilen Alkohole und/oder Ether gebildet. Unter Einsatz dieser Mittel betrifft die Erfindung dann die im Temperaturbereich von 5 bis 20 °C fließ- und pumpfähigen Bohrlochbehandlungsmittel, insbesondere Bohrspülungen auf Basis einer geschlossenen Ölphase, insbesondere in Abmischung mit einer dispersen wäßrigen Phase (W/O-Inverttyp).

Im Sinne der vorliegenden Erfindung ist es bevorzugt, die Emulgatoren auf Alkylglycosidbasis zusammen mit Esterölen von Monocarbonsäuren und/oder Polycarbonsäuren mit 1- und/oder mehrfunktionellen Alkoholen, entsprechenden Esterölen der Kohlensäure, oleophilen Alkoholen und/oder entsprechenden Ethern als ökologisch verträgliche Ölphasen einzusetzen. Erfindungsgemäß ist es ferner bevorzugt, daß bei der Mitverwendung von Esterölen in der geschlossenen Ölphase, insbesondere entsprechender Ester von Monocarbonsäuren, von Polycarbonsäuren und/oder der Kohlensäure, diese Esteröle wenigstens etwa ein Drittel, vorzugsweise aber den überwiegenden Anteil dieser ökologisch verträglichen Ölphase ausmachen.

Die Erfindung umfaßt Ölphasen, die auch bei niederen Temperaturen fließ- und pumpfähig sind und insbesondere für die Herstellung von W/O-Emulsionen geeignet sind. In diesem Sinne ist es erfindungsgemäß bevorzugt, daß die Emulgatoren auf Alkylglycosidbasis in fließ- und pumpfähigen Invert-Systemen mit geschlossener Ölphase zum Einsatz kommen, die Erstarrungswerte (Fließ- und Stockpunkt) unterhalb 0 °C, vorzugsweise unterhalb -5 °C, aufweisen und dabei im Temperaturbereich von 0 bis 5 °C eine Brookfield(RVT)-Viskosität nicht über 55 mPas, vorzugsweise nicht über 45 mPas, besitzen. Für Invert-Bohrspülungen der erfindungsgemäß betroffenen Art gilt insbesondere, daß die Ölphase des Invert-Schlammes in bevorzugten Ausführungsformen im Temperaturbereich von 0 bis 5 °C eine Brookfield(RVT)-Viskosität unterhalb 50 mPas, vorzugsweise nicht über 40 mPas, aufweist.

Einheitlich gilt für alle erfindungsgemäß zu verwendenden Ölphasen bzw. Ölmischphasen, daß Flammpunkte von wenigstens etwa 100 °C und vorzugsweise Flammpunkte oberhalb etwa 135 °C aus Sicherheitsgründen im Betrieb gefordert werden. Deutlich darüberliegende Werte, insbesondere solche oberhalb 150 °C können besonders zweckmäßig sein. Einheitlich gilt weiterhin für die verschiedenen potentiell Hydrolyse-gefährdeten Ölphasen, die im erfindungsgemäßen Rahmen eingesetzt werden können, daß das Erfordernis der ökologischen Verträglichkeit nicht nur für die Einsatzverbindung, also beispielsweise das jeweils gewählte Esteröl oder Gemisch von Esterölen erfüllt ist, sondern daß auch bei einer partiellen Verseifung im praktischen Einsatz keine toxikologischen und insbesondere keine inhalations-toxikologischen Gefährdungen ausgelöst werden. Es ist im Rahmen der genannten älteren Anmeldungen ausführlich geschildert, daß hier insbesondere die verschiedenen Vertreter der Esteröle angesprochen sind, wobei hier wiederum monofunktionellen Alkoholen aus der Esterbildung besondere Bedeutung zukommt. Monofunktionelle Alkohole sind im Vergleich zu polyfunktionellen Alkoholen in ihren niederen Gliedern hochflüchtig, so daß durch eine Partialhydrolyse hier sekundäre Gefährdungen auftreten könnten. Bevorzugt sind dementsprechend in den Klassen der verschiedenen Esteröle mitverwendete monofunktionelle Alkohole bzw. die entsprechenden Reste dieser Alkohole so gewählt, daß sie im Molekül wenigstens 6 C-Atome, vorzugsweise wenigstens 8 C-Atome, besitzen.

Für Invert-Bohrspülungen der erfindungsgemäß betroffenen Art gilt unabhängig von der bestimmten Beschaffenheit der geschlossenen Ölphase, daß sie in bevorzugten Ausführungsformen eine Plastische Viskosität (PV) im Bereich von etwa 10 bis 60 mPas und eine Fließgrenze (Yield Point YP) im Bereich von 2.63 bis 21.0 kg/100 m² (5 bis 40 lb/100 ft²)- jeweils bestimmt bei 50 °C - aufweisen.

Als ökologisch verträgliche und bei niederen Temperaturen gut fließfähige Ölphase haben sich insbesondere Esteröle von Monocarbonsäuren erwiesen, die dann in einer bevorzugten Ausführungsform der Erfindung sich aus wenigstens einer der nachfolgenden Unterklassen ableiten:
a) Ester aus C₁₋₅-Monocarbonsäuren und 1- und/oder mehrfunktionellen Alkoholen, wobei Reste aus 1 -wertigen Alkoholen wenigstens 6, bevorzugt wenigstens 8 C-Atome aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Ester entsprechender aliphatisch gesättigter Monocarbonsäuren und 1 - und/oder mehrfunktionellen Alkoholen der unter a) genannten Art,
c) Ester olefinisch 1- und/oder mehrfach ungesättigter Monocarbonsäuren mit wenigstens 16, insbesondere 16 bis 24 C-Atomen und insbesondere monofunktionellen geradkettigen und/oder verzweigten Alkoholen.

Ausgangsmaterialien für die Gewinnung zahlreicher in diese Unterklassen fallenden Monocarbonsäuren, insbesondere höherer Kohlenstoffzahl, sind pflanzliche und/oder tierische Öle. Genannt seien Kokosöl, Palmkernöl und/oder Babassuöl, insbesondere als Einsatzmaterialien für die Gewinnung von Monocarbonsäuren des überwiegenden Bereichs bis C₁₈ und von im wesentlichen gesättigten Komponenten. Pflanzliche Esteröle, insbesondere für olefinisch 1 - und gegebenenfalls mehrfach ungesättigte Carbonsäuren des Bereichs von C₁₆₋₂₄ sind beispielsweise Palmöl, Erdnußöl, Rizinusöl, Sonnenblumenöl und insbesondere Rüböl. Aber auch synthetisch gewonnene Komponenten sind sowohl auf der Carbonsäureseite als auf der Seite der Alkohole wichtige Strukturelemente für ökologisch verträgliche Ölphasen.

### Additive in der Öl-basierten Spülung

Invert-Bohrspülungen der erfindungsgemäß betroffenen Art enthalten zusammen mit der geschlossenen Ölphase die feindisperse wäßrige Phase in Mengen von etwa 5 bis 50 Gew.-%, bevorzugt in Mengen von etwa 10 bis 30 Gew.-%. Erfindungungsgemäß ist es weiterhin bevorzugt, daß die disperse wäßrige Phase Salze von der Art CaCl₂ und/oder KCl gelöst enthält.

Neben dem Wassergehalt kommen alle für vergleichbare Spülungstypen vorgesehenen Additive in Betracht. Diese Additive können wasserlöslich, öllöslich und/oder wasser- bzw. öldispergierbar sein.

Übliche Additive sind neben den erfindungsgemäß definierten Emulgatoren beispielsweise fluid-loss-Additive, Strukturviskosität aufbauende lösliche und/oder unlösliche Stoffe, Alkalireserven, Mittel zur Inhibierung des unerwünschten Wasseraustausches zwischen erbohrten Formationen - z. B Wasser-quellbare Tone und/oder Salzschichten - und der Spülflüssigkeit, Netzmittel zum besseren Aufziehen der emulgierten Ölphase auf Feststoffoberflächen, z. B. zur Verbesserung der Schmierwirkung, aber auch zur Verbesserung des oleophilen Verschlusses freigelegter Gesteinsformationen bzw. Gesteinsflächen, Biocide und dergleichen. Im einzelnen ist hier auf den einschlägigen Stand der Technik zu verweisen, wie er beispielsweise in der eingangs zitierten Fachliteratur ausführlich beschrieben wird, siehe hierzu insbesondere Gray und Darley, aao., Kapitel 11, "Drilling Fluid Components". Nur auszugsweise sei dementsprechend zitiert:
Feindisperse Zusatzstoffe zur Eröhung der Spülungsdichte: Weit verbreitet ist das Bariumsulfat (Baryt), aber auch Calciumcarbonat (Calcit) oder das Mischcarbonat von Calcium und Magnesium (Dolomit) finden Verwendung.

Mittel zum Aufbau der Strukturviskosität, die gleichzeitig auch als fluid-loss-Additive wirken: In erster Linie ist hier Bentonit bzw. hydrophobierter Bentonit zu nennen. Für Salzwasserspülungen kommt anderen vergleichbaren Tonen, insbesondere Attapulgit und Sepiolith in der Praxis beträchtliche Bedeutung zu.

Auch der Mitverwendung organischer Polymerverbindungen natürlichen und/oder synthetischen Ursprungs kann beträchtliche Bedeutung in diesem Zusammenhang zukommen. Zu nennen sind hier insbesondere Stärke oder chemisch modifizierte Stärken, Cellulosederivate wie Carboxymethylcellulose, Guargum, Xanthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation.

Verdünner zur Viskositätsregulierung: Die sogenannten Verdünner können organischer oder anorganischer Natur sein, Beispiele für organische Verdünner sind Tannine und/oder Quebracho-Extrakt. Weitere Beispiele hierfür sind Lignit und Lignitderivate, insbesondere Lignosulfonate. Wie zuvor allerdings angegeben, wird in einer bevorzugten Ausführungsform der Erfindung auf die Mitverwendung toxischer Komponenten gerade hier verzichtet, wobei hier in erster Linie die entsprechenden Salze mit toxischen Schwermetallen wie Chrom und/oder Kupfer zu nennen sind. Ein Beispiel für anorganische Verdünner sind Polyphosphatverbindungen.

Den unerwünschten Wasseraustausch mit beispielsweise Tonen inhibierende Zusatzstoffe: In Betracht kommen hier die aus dem Stand der Technik zu öl- und wasserbasierten Bohrspülungen bekannten Zusatzstoffe. Insbesondere handelt es sich dabei um Halogenide und/oder Carbonate der Alkali- und/oder Erdalkalimetalle, wobei entsprechenden Kaliumsalzen gegebenenfalls in Kombination mit Kalk besondere Bedeutung zukommen kann.

Verwiesen sei beispielsweise auf die entsprechenden Veröffentlichungen in "Petroleum Engineer International", September 1987, 32 - 40 und "World Oil", November 1983, 93 - 97.

Alkalireserven: In Betracht kommen hier auf das Gesamtverhalten der Spülung abgestimmte anorganische und/oder organische Basen, insbesondere entsprechende basische Salze bzw. Hydroxide von Alkali- und/oder Erdalkalimetallen sowie organische Basen. Art und Menge dieser basischen Komponenten sind dabei in bekannter Weise so gewählt und aufeinander abgestimmt, daß die Bohrlochbehandlungsmittel auf einen pH-Wert im Bereich von etwa neutral bis mäßig-basisch, insbesondere auf den Bereich von etwa 7,5 bis 11 eingestellt sind.

Die Menge der jeweils eingesetzten Hilfs- und Zusatzstoffe bewegt sich grundsätzlich im üblichen Rahmen und kann damit der zitierten einschlägigen Literatur entnommen werden.

### Beispiele

In den nachfolgenden Beispielen 1 bis 4 werden unter Einhaltung einer Standardrezeptur für Öl-basierte Bohrspülsysteme vom W/O-Typ entsprechende Bohrspülsysteme zusammengestellt, wobei die geschlossene Ölphase jeweils durch einen ausgewählten oleophilen Carbonsäureester der nachfolgenden Definition gebildet ist:
Estergemisch aus im wesentlichen gesättigten Fettsäuren auf Basis Palmkern und 2-Ethylhexanol, das zum weitaus überwiegenden Teil auf C_{12/14}-Fettsäuren zurückgeht und der folgenden Spezifikation entspricht:
- C₈:: 3,5 bis 4,5 Gew.-%
- C₁₀:: 3,5 bis 4,5 Gew.-%
- C₁₂:: 65 bis 70 Gew.-%
- C₁₄:: 20 bis 24 Gew.-%
- C₁₆:: ca. 2 Gew.-%
- C₁₈:: 0,3 bis 1 Gew.-%
Das Estergemisch liegt als hellgelbe Flüssigkeit mit einem Flammpunkt oberhalb 165 °C und einer Viskosität (Brookfield 20 °C) von 7 bis 9 cp vor.

Am ungealterten und am gealterten Material werden die Viskositätskennwerte wie folgt bestimmt:
Messung der Viskosität bei 50 °C in einem Fann-35-Viskosimeter der Fa. Baroid Drilling Fluids Inc.. Es werden in an sich bekannter Weise bestimmt die Plastische Viskosität (PV), die Fließgrenze (YP) sowie die Gelstärke (lb/100 ft²) nach 10 sec. und 10 min.. Bestimmt wird in Beispielen 1 und 2 weiterhin der fluid loss-Wert (HTHP).

Die Alterung der jeweiligen Bohrspülung wird durch Behandlung für den Zeitraum von 16 h bei 125 °C im Autoklaven - im sogenannten Rolleroven - vorgenommen.

Die Bohrspülungssysteme werden gemäß der folgenden Grundrezeptur in an sich bekannter Weise zusammengestellt:
230 ml Carbonsäureester-Öl
26 ml Wasser
6 g organophiler Bentonit (GELTONE der Fa. Baroid Drilling Fluids Inc.)
12 g organophiler Lignit (DURATONE der Fa. Baroid Drilling Fluids Inc.)
2 g Kalk
6 g Emulgator auf Alkylglycosid-Basis
3 g Co-Emulgator auf Basis C₁₈-Fettsäure - eingesetzt nur in den Beispielen 3 und 4
346 g Baryt
9,2 g CaCl₂ x 2 H₂O

### Beispiel 1

Als Emulgator auf Alkylglycosid-Basis wird das Kondensationsprodukt aus Glukose und einem C₁₆-Fettalkohol natürlichen Ursprungs (Handelsprodukt "Lorol C₁₆" der Anmelderin) eingesetzt. Die am ungealterten und gealterten Material bestimmten Kennzahlen - wie zuvor angegeben - sind in der nachfolgenden tabellarischen Zusammenfassung aufgeführt.

| | Ungealtertes Material | Gealtertes Material |
|---|---|---|
| Plastische Viskosität (PV) | 41 | 44 |
| Fließgrenze (YP) | 14 | 22 |

| Gelstärke (lb/100 ft²) | | |
|---|---|---|
| 10 sec. | 7 | 18 |
| 10 min. | 11 | 36 |
| HTHP 3 ml | | |

### Beispiel 2

In dem vorliegenden Beispiel wird als Emulgator auf Alkylglycosid-Basis das Umsetzungsprodukt von Glukose mit einem Fettalkoholgemisch natürlichen Ursprungs und der weitaus überwiegenden Kettenlänge von C₁₂₋₁₄ (Handelsprodukt "Lorol 1214 S" der Anmelderin) verwendet. Die am ungealterten und gealterten Material bestimmten Werte sind wie folgt.

| | Ungealtertes Material | Gealtertes Material |
|---|---|---|
| Plastische Viskosität (PV) | 41 | 42 |
| Fließgrenze (YP) | 15 | 18 |

| Gelstärke (lb/100 ft²) | | |
|---|---|---|
| 10 sec. | 8 | 13 |
| 10 min. | 11 | 25 |
| HTHP 5 ml | | |

### Beispiel 3

Der Ansatz des Beispiels 1 wird wiederholt, zusätzlich wird hier jedoch wie eingangs angegeben ein Co-Emulgator auf Basis C₁₈-Fettsäure mitverwendet. Die am ungealterten und gealterten Material bestimmten Kennwerte sind die folgenden.

| | Ungealtertes Material | Gealtertes Material |
|---|---|---|
| Plastische Viskosität (PV) | 37 | 36 |
| Fließgrenze (YP) | 7 | 8 |

| Gelstärke (lb/100 ft²) | | |
|---|---|---|
| 10 sec. | 5 | 6 |
| 10 min. | 11 | 5 |

### Beispiel 4

Es wird der Ansatz des Beispiels 2 wiederholt, jedoch auch hier unter Zusatz des Co-Emulgators auf Basis C₁₈-Fettsäure gearbeitet.

Die am ungealterten und gealterten Material bestimmten Kennwerte sind die folgenden.

| | Ungealtertes Material | Gealtertes Material |
|---|---|---|
| Plastische Viskosität (PV) | 38 | 35 |
| Fließgrenze (YP) | 13 | 10 |

| Gelstärke (lb/100 ft²) | | |
|---|---|---|
| 10 sec. | 7 | 5 |
| 10 min. | 14 | 9 |

## Patentansprüche

1. Verwendung oberflächenaktiver Alkylglycosidverbindungen vom W/O-Typ als ökologisch verträgliche Emulgatoren in fließ- und pumpfähigen Bohrspülungen oder anderen fließfähigen Bohrlochbehandlungsmitteln, die zusammen mit einer dispersen wäßrigen Phase eine geschlossene und dabei ökologisch verträgliche Ölphase aufweisen und für die umweltschonende Erschließung biologischer Lagerstätten, beispielsweise von Erdöl- bzw. Erdgasvorkommen, geeignet sind, wobei im Fall des Einsatzes hydrolysegefährdeter Ölphasen entsprechende Öle gewählt werden, die auch bei einer partiellen Verseifung im praktischen Einsatz zu keinen toxikologischen, insbesondere keinen inhalations-toxikologischen Gefährdungen führen.

2. Ausführungsform nach Anspruch 1, dadurch gekennzeichnet, daß Alkylglycosidverbindungen der Formel
R-O-Zₙ (I)
verwendet werden, in der
R lineares und/oder verzweigtes, gesättigtes und/oder ungesättigtes Alkyl mit wenigstens 8 C-Atomen, vorzugsweise mit 10 bis 22 C-Atomen,
Z einen oder mehrere Reste von Aldosen und/oder Ketosen, insbesondere Hexose- und/oder Pentose-Einheiten sowie
n im Mittel eine Zahl von 1 bis 5 und insbesondere von etwa 1,2 bis 2,5 bedeuten.

3. Ausführungsform nach Ansprüchen 1 und 2, dadurch gekennzeichnet, daß Alkylglycosidverbindungen eingesetzt werden, die wenigstens anteilsweise und vorzugsweise überwiegend Reste R aus der allgemeinen Formel (I) mit wenigstens 12 C-Atomen, vorzugsweise mit wenigstens 16 C-Atomen, bei gleichzeitiger Einschränkung von n auf Maximalwerte von etwa 2 aufweisen.

4. Ausführungsform nach Ansprüchen 1 bis 3, dadurch gekennzeichnet, daß die Alkylglycosidverbindungen den wenigstens überwiegenden Emulgatoranteil bilden, dabei aber auch zusammen mit anderen, insbesondere biologisch verträglichen W/O-Emulgatoren eingesetzt werden können.

5. Ausführungsform nach Ansprüchen 1 bis 4, dadurch gekennzeichnet, daß Alkylglycosidverbindungen in Mengen von 0,1 bis 10 Gew.-%, vorzugsweise von 0,5 bis 5 Gew.-% und insbesondere in Mengen von etwa 1 bis 3 Gew.-%, - Gew.-% jeweils bezogen auf die Summe von Wasser und Öl - eingesetzt werden.

6. Ausführungsform nach Ansprüchen 1 bis 5, dadurch gekennzeichnet, daß die Emulgatoren auf Alkylglycosidbasis zusammen mit Esterölen von Monocarbonsäuren und/oder Polycarbonsäuren mit 1- und/oder mehrfunktionellen Alkoholen, entsprechenden Esterölen der Kohlensäure, oleophilen Alkoholen und/oder entsprechenden Ethern als ökologisch verträgliche Ölphasen zum Einsatz kommen.

7. Ausführungsform nach Ansprüche 1 bis 6, dadurch gekennzeichnet, daß die Alkylglycosidverbindungen zusammen mit Ölphasen bzw. Ölmischphasen eingesetzt werden, die Flammpunkte von wenigstens 100 °C, vorzugsweise oberhalb etwa 135 °C, aufweisen.

8. Ausführungsform nach Ansprüchen 1 bis 7, dadurch gekennzeichnet, daß die Emulgatoren auf Alkylglycosidbasis in fließ- und pumpfähigen Invert-Systemen mit geschlossener Ölphase zum Einsatz kommen, die Erstarrungswerte (Fließ- und Stockpunkt) unterhalb 0 °C, vorzugsweise unterhalb -5 °C aufweisen und dabei im Temperaturbereich von 0 bis 5 °C eine Brookfield(RVT)-Viskosität nicht über 55 mPas, vorzugsweise nicht über 45 mPas, besitzen.

9. Ausführungsform nach Ansprüchen 1 bis 8, dadurch gekennzeichnet, daß ökologisch unbedenkliche Alkylglycosid-Emulgatoren vom W/O-Typ zusammen mit einer Ölphase zum Einsatz kommen, die wenigstens anteilsweise Esteröle von Monocarbonsäuren aus wenigstens einer der nachfolgenden Unterklassen enthält:
a) Ester aus C₁₋₅-Monocarbonsäuren und 1- und/oder mehrfunktionellen Alkoholen, wobei Reste aus 1-wertigen Alkoholen wenigstens 6, bevorzugt wenigstens 8 C-Atome, aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Ester entsprechender aliphatisch gesättigter Monocarbonsäuren und 1- und/oder mehrfunktionellen Alkoholen der unter a) genannten Art,
c) Ester olefinisch 1- und/oder mehrfach ungesättigter Monocarbonsäuren mit wenigstens 16, insbesondere 16 bis 24 C-Atomen, und insbesondere monofunktionellen geradkettigen und/oder verzweigten Alkoholen.

10. Ausführungsform nach Ansprüchen 1 bis 9, dadurch gekennzeichnet, daß die Emulgatoren auf Alkylglycosid-Basis zusammen mit dem bei ihrer Synthese eingesetzten Alkohol-Überschuß oder wenigstens einem substantiellen Anteil hiervon verwendet werden, wobei der Anteil an freiem Alkohol wenigstens etwa 50 Mol-%, vorzugsweise wenigstens etwa 100 Mol-% - bezogen auf Alkylgycosidverbindung - ausmachen kann.

11. Ausführungsform nach Ansprüchen 1 bis 10, dadurch gekennzeichnet, daß die Alkylglycosidverbindungen in weitgehend wasserfreier Form, z. B. als Lösungskonzentrate in ökologisch unbedenklichen Lösern oder als Feststoffe - hier insbesondere in Granulatform und dabei gewünschtenfalls in Abmischung mit partikulären Feststoffen - zum Einsatz kommen.

12. Invert-Bohrspülungen, die für eine umweltfreundliche Erschließung von geologischen Vorkommen geeignet sind und in einer geschlossenen Ölphase eine disperse wäßrige Phase zusammen mit Emulgatoren und üblichen weiteren Hilfsstoffen, beispielsweise Verdikkungsmitteln, fluid-loss-Additiven, Beschwerungsmitteln, wasserlöslichen Salzen und Alkalireserven enthalten, dadurch gekennzeichnet, daß sie zusammen mit einer ökologisch verträglichen geschlossenen Ölphase oberflächenaktive Alkylglycosidverbindungen der allgemeinen Formel (I) als Emulgator bzw. Emulgatorbestandteil enthalten.

13. Invert-Bohrspülungen nach Anspruch 12, dadurch gekennzeichnet, daß sie als ökologisch verträgliche geschlossene Ölphase Esteröle, oleophile Alkohole und/oder entsprechender Ether enthält.

14. Invert-Bohrspülungen nach Ansprüchen 12 und 13, dadurch gekennzeichnet, daß sie eine Plastische Viskosität (PV) im Bereich von etwa 10 bis 60 mPas und eine Fließgrenze (Yield Point YP) im Bereich von etwa 2.63 bis 21.0 kg/100 m² (5 bis 40 lb/100 ft² )- jeweils bestimmt bei 50 °C aufweisen.

15. Invert-Bohrspülungen nach Ansprüchen 12 bis 14, dadurch gekennzeichnet, daß bei der Mitverwendung von Esterölen in der geschlossenen Ölphase, insbesondere entsprechender Ester von Monocarbonsäuren, von Polycarbonsäuren und/oder der Kohlensäure, diese Esteröle wenigstens etwa ein Drittel, vorzugsweise aber den überwiegenden Anteil dieser ökologisch verträglichen Ölphase ausmachen.

16. Invert-Bohrspülungen nach Ansprüchen 12 bis 15, dadurch gekennzeichnet, daß ihr disperser Wasseranteil etwa 5 bis 50 Gew.-%, bevorzugt etwa 10 bis 30 Gew.-% ausmacht und insbesondere Salze von der Art CaCl₂ und/oder KCl gelöst enthält.

17. Invert-Bohrspülungen nach Ansprüchen 12 bis 16, dadurch gekennzeichnet, daß die Ölphase des Invert-Schlammes im Temperaturbereich von 0 bis 5 °C eine Brookfield(RVT)-Viskosität unterhalb 50 mPas, vorzugsweise nicht über 40 mPas aufweist.

## Claims

1. The use of surface-active alkyl glycoside compounds of the w/o type as ecologically compatible emulsifiers in flowable and pumpable drilling fluids or other well treatment fluids which, together with a disperse aqueous phase, comprise a continuous and ecologically compatible oil phase and are suitable for the ecologically safe development of biological reservoirs, for example of oil and gas occurrences, oils which do not lead to any toxicological hazards, particularly inhalation-toxicological hazards, in practical application, even in the event of partial hydrolysis, being selected in cases where oil phases vulnerable to hydrolysis are used.

2. The use claimed in claim 1, characterized in that the alkyl glycoside compounds used correspond to the formula
R-O-Zₙ (I)
in which
R is a linear and/or branched, saturated and/or unsaturated alkyl radical containing at least 8 carbon atoms and preferably 10 to 22 carbon atoms,
Z represents one or more aldose and/or ketose units, more particularly hexose and/or pentose units, and
n has an average value of 1 to 5 and, more particularly, in the region of 1.2 to 2.5.

3. The use claimed in claims 1 and 2, characterized in that the alkyl glycoside compounds used at least partly and, preferably, predominantly contain radicals R from general formula (I) containing at least 12 carbon atoms and preferably at least 16 carbon atoms, the value of n being limited at the same time to a maximum of about 2.

4. The use claimed in claims 1 to 3, characterized in that the alkyl glycoside compounds form at the least the predominant emulsifier component, but may be used together with other, more particularly biologically compatible w/o emulsifiers.

5. The use claimed in claims 1 to 4, characterized in that alkyl glycoside compounds are used in quantities of 0.1 to 10% by weight, preferably in quantities of 0.5 to 5% by weight and, more preferably, in quantities of about 1 to 3% by weight, based on the sum of water and oil.

6. The use claimed in claims 1 to 5, characterized in that the alkyl glycoside-based emulsifiers are used together with ester oils of monocarboxylic acids and/or polycarboxylic acids with mono- and/or polyfunctional alcohols, corresponding ester oils of carbonic acid, oleophilic alcohols and/or corresponding ethers as ecologically safe oil phases.

7. The use claimed in claims 1 to 6, characterized in that the alkyl glycoside compounds are used together with oil phases or mixed oil phases having flash points of at least 100°C and preferably above about 135°C.

8. The use claimed in claims 1 to 7, characterized in that the alkyl glycoside-based emulsifiers are used in flowable and pumpable invert systems with a continuous oil phase which have solidification (flow and pour point) below 0°C and a Brookfield (RVT) viscosity at 0 to 5°C of not more than 55 mPas and preferably not more than 45 mPas.

9. The use claimed in claims 1 to 8, characterized in that ecologically safe alkyl glycoside emulsifiers of the w/o type are used together with an oil phase which at least partly contains ester oils of monocarboxylic acids from at least one of the following subclasses:
a) esters of C₁₋₅ monocarboxylic acids and mono- and/or polyfunctional alcohols, residues of monohydric alcohols having at least 6 and preferably at least 8 carbon atoms and the polyhydric alcohols preferably containing 2 to 6 carbon atoms in the molecule,
b) esters of monocarboxylic acids of synthetic and/or natural origin containing 6 to 16 carbon atoms, more particularly esters of corresponding aliphatically saturated monocarboxylic acids and mono- and/or polyfunctional alcohols of the type mentioned in a),
c) esters of mono- and/or polyolefinically unsaturated monocarboxylic acids containing at least 16 and, more particularly, 16 to 24 carbon atoms and more particularly monofunctional linear and/or branched alcohols.

10. The use claimed in claims 1 to 9, characterized in that the emulsifiers based on alkyl glucosides are used together with the alcohol excess used in their synthesis or at least a substantial part thereof, the free alcohol making up at least about 50 mol-% and preferably at least about 100 mol-%, based on the alkyl glycoside compound.

11. The use claimed in claims 1 to 10, characterized in that the alkyl glycoside compounds are used in substantially water-free form, for example as solution concentrates in ecologically safe solvents or as solids, more particularly in granular form and, if desired, in admixture with particulate solids.

12. Invert drilling muds which are suitable for the ecologically safe development of geological occurrences and which contain - in a continuous oil phase - a disperse aqueous phase together with emulsifiers and typical other additives, for example thickeners, fluid loss additives, weighting agents, water-soluble salts and alkali reserves, characterized in that they contain surface-active alkyl glycoside compounds corresponding to general formula (I) as emulsifier or emulsifier component together with an ecologically safe oil phase.

13. Invert drilling muds as claimed in claim 12, characterized in that they contain ester oils, oleophilic alcohols and/or corresponding ethers as the ecologically safe continuous oil phase.

14. Invert drilling muds as claimed in claims 12 and 13, characterized in that they have a plastic viscosity of about 10 to 60 mPas and a yield point (YP) of about 2.63 to 21.0 kg/100 m² (5 to 40 lb/100 ft²), as determined at 50°C.

15. Invert drilling muds as claimed in claims 12 to 14, characterized in that, where ester oils - more particularly corresponding esters of monocarboxylic acids, polycarboxylic acids and/or carbonic acid - are used in the continuous oil phase, these ester oils make up at least about one third, but preferably the predominant part of this ecologically safe oil phase.

16. Invert drilling muds as claimed in claims 12 to 15, characterized in that their dispersed water content makes up around 5 to 50% by weight and preferably around 10 to 30% by weight and contains in particular salts of the CaCl₂ and/or KCl type in dissolved form.

17. Invert drilling muds as claimed in claims 12 to 16, characterized in that the oil phase of the invert mud has a Brookfield (RVT) viscosity below 50 mPas and preferably not more than 40 mPas at temperatures in the range from 0 to 5°C.

## Revendications

1. Utilisation de composés d'alkylglucoside tensioactifs du type W/O comme émulsionnants compatibles du point de vue écologique dans des solutions de curage aptes à l'écoulement et pompables ou dans d'autres agents de traitements de puits de forage liquides, qui comportent en commun avec une phase aqueuse dispersée une phase huileuse fermée et en outre compatible avec l'écologie et qui sont indiquées pour la mise en exploitation avec protection de l'environnement de gisements, par exemple de gisements de pétrole brut ou de gaz naturel, pour lesquels sont choisies dans le cas de mise en oeuvre de phases huileuses en danger d'hydrolyse des huiles adéquates, qui ne conduisent pas, lors d'une saponification partielle dans l'utilisation pratique, à des risques toxicologiques, en particulier toxicologiques par inhalation.

2. Forme de réalisation selon la revendication 1, caractérisée en ce que des composés d'alkylglucoside de formule :
R-O-Zₙ (I)
dans laquelle,
R représente un alkyle avec au moins 8 atomes de C, de préférence avec 10 à 12 atomes de C, linéaire ou ramifié, saturé et/ou non saturé,
Z représente un ou plusieurs radicaux d'aldoses et/ou de cétoses, en particulier des unités hexose et/ou pentose ainsi que
n représente en moyenne un nombre de 1 à 5 et en particulier environ de 1,2 à 2,5.

3. Forme de réalisation selon les revendications 1 et 2, caractérisée en ce que sont mis en oeuvre des composés d'alkylglucoside, qui comportent au moins partiellement et de préférence principalement des radicaux R de la formule générale (I) avec au moins 12 atomes de C, de préférence avec au moins 16 atomes de C, avec limite simultanée de ₙ à des valeurs nominales d'environ 2.

4. Forme de réalisation selon les revendications 1 à 3, caractérisée en ce que les composés d'alkylglucoside forment au moins la partie principale d'émulsionnant, mais peuvent être en outre mis en oeuvre avec d'autres émulsionnants W/O en particulier compatibles biologiquement.

5. Forme de réalisation selon les revendications 1 à 4, caractérisée en ce que des composés d'alkylglucoside sont mis en oeuvre en quantités de 0,1 à 10% en poids, de préférence de 0,5 à 5% en poids et en particulier en quantités d'environ 1 à 3% en poids - % en poids respectivement rapporté à la somme d'eau et d'huile.

6. Forme de réalisation selon les revendications 1 à 5, caractérisée en ce que les émulsionnants à base d'alkylglucoside sont mis en oeuvre en commun avec des huiles-ester d'acides monocarboxyliques et/ou polycarboxyliques avec des alcools mono et/ou polyfonctionnels, des huiles ester correspondantes de l'acide carboxylique, des alcools oléophiles et/ou des éthers correspondants, en tant que phases huileuses compatibles écologiquement.

7. Forme de réalisation selon les revendications 1 à 6, caractérisée en ce que les composés d'alkylglucoside sont mis en oeuvre en commun avec des phases huileuses ou des phases mixtes d'huile, qui ont des points d'inflammation d'au moins 100°C, de préférence supérieurs à environ 135°C.

8. Forme de réalisation selon les revendications 1 à 7, caractérisée en ce que les émulsionnants à base d'alkylglucoside sont mis en oeuvre dans des systèmes « invert » avec une phase huileuse fermée aptes à l'écoulement et pompables et ils ont les valeurs de congélation (point de solidification et point d'écoulement) en dessous de 0°C, de préférence en dessous de - 5°C et possèdent en outre dans la plage de température de 0 à 5°C une viscosité Brookfield (RVT) pas supérieure à 55 mPas, de préférence pas supérieure à 45 mPas.

9. Forme de réalisation selon les revendications 1 à 8, caractérisée en ce que des émulsionnants d'alkylglucoside sans risque pour l'écologie du type W/O sont utilisés en commun avec une phase huileuse, qui contient au moins partiellement des huiles-ester d'acides monocarboxyliques d'au moins une des classes suivantes:
a) Esters d'acides monocarboxyliques en C₁₋₅ et alcools mono et/ou polyfonctionnels, dans lesquels des restes d'alcools monovalents ont au moins 6, de préférence au moins 8 atomes de C et les alcools plurivalents possèdent de préférence 2 à 6 atomes de C dans la molécule.
b) Esters d'acides monocarboxyliques d'origine synthétique et/ou naturelle avec 6 à 16 atomes de C, en particulier esters d'acides monocarboxyliques correspondants saturés du point de vue aliphatique et alcools mono et/ou polyfonctionnels du type indiqué en a).
c) Esters d'acides monocarboxyliques une et/ou plusieurs fois insaturés oléfiniquement, avec au moins 16, en particulier 16 à 24 atomes de C, et en particulier des alcools monofonctionnels à chaîne droite et/ou ramifié.

10. Forme de réalisation selon les revendications 1 à 9, caractérisée en ce que les émulsionnants à base d'alkylglucoside sont utilisés en commun avec l'excès d'alcool mis en oeuvre lors de leur synthèse ou au moins une partie substantielle ce celui-ci, la partie d'alcool libre pouvant atteindre au moins environ 50 molaire, de préférence au moins environ 100% molaire - rapporté au composé d'alkylglucoside -

11. Forme de réalisation selon les revendications 1 à 10, caractérisée en ce que les composés d'alkylglucoside sont mis en oeuvre sous une forme largement privée d'eau, par exemple comme concentré de solution dans des solvants ou comme matières solides - dans ce cas en particulier sous forme de granulés et en outre si on le désire en mélange avec des matières solides particulières.

12. Solutions de curage « invert » qui sont indiquées pour une mise en exploitation non polluante de gisements géologiques et contiennent dans une phase huileuse fermée une phase aqueuse dispersée en commun avec des émulsionnants et d'autres matières auxiliaires usuelles, par exemple des agents épaississants, des additifs pour pertes de liquide, des agents alourdissants, des sels solubles dans l'eau et des réserves d'alcalis, caractérisées en ce qu'elles contiennent ensemble avec une phase huileuse fermée compatible écologiquement des composés d'alkylglucoside tensioactifs de formule générale (I) comme émulsionnant ou composant d'émulsionnant.

13. Solutions de curage « invert » selon la revendication 12, caractérisées en ce qu'elles contiennent des huiles-ester comme phase huileuse fermée compatible avec l'écologie, des alcools oléophiles et/ou des éthers correspondants.

14. Solutions de curage « invert » selon les revendications 12 et 13, caractérisées en ce qu'elles ont une viscosité plastique (PV) dans la plage d'environ 10 à 60 mPas et une limite d'écoulement (Yield Point YP) dans la plage environ de 2,63 à 210 kg/100 m² (5 à 40 lb/100 ft²), déterminées respectivement à 50°C.

15. Solutions de curage « invert » selon les revendications 12 à 14, caractérisées en ce que lors de la co-utilisation d'huiles-ester dans la phase fermée, en particulier d'ester correspondants d'acides monocarboxyliques, d'acides polycarboxyliques et/ou d'acide carboxylique, ces huiles-ester représentent au moins environ un tiers, mais de préférence la partie principale de cette phase compatible écologiquement.

16. Solutions de curage « invert » selon les revendications 12 à 15, caractérisées en ce que leur partie d'eau dispersée représente environ 5 à 50 % en poids, de préférence environ 10 à 30% en poids et contient en particulier des sels du type Cacl₂ et/ou KCl.

17. Solutions de curage « invert » selon les revendications 12 à 16, caractérisées en ce que la phase huileuse de la boue « invert » a dans la zone de température de 0 à 5°C une viscosité Brookfield (RVT) inférieure à 50 mPas, de préférence pas au-dessus de 40 mPas.
